# EUROPÄISCHE PATENTSCHRIFT

(11) **EP 2 962 068 B1**
(45) Veröffentlichungstag und Bekanntmachung des Hinweises auf die Patenterteilung: **11.04.2018**
(21) Anmeldenummer: 14705790.5
(22) Anmeldetag: 24.02.2014
(51) Int. Cl.: G01D 5/20, G01D 5/22

(54) **SENSOR ZUM ERFASSEN EINER POSITION EINES GEBERMAGNETEN**
SENSOR FOR DETECTING A POSITION OF A TRANSDUCER MAGNET
CAPTEUR SERVANT À DÉTECTER UNE POSITION D'UN AIMANT ÉMETTEUR

(30) Priorität: 01.03.2013 DE 102013203586
(43) Veröffentlichungstag der Anmeldung: 06.01.2016
(73) Patentinhaber: Continental Teves AG & Co. oHG, 60488 Frankfurt (DE)
(72) Erfinder: ACKER, Heinrich, 65824 Schwalbach (DE)
(86) Internationale Anmeldenummer: PCT/EP2014/053506
(87) Internationale Veröffentlichungsnummer: WO 2014/131716

(56) Entgegenhaltungen:
- EP-A1- 2 149 784
- WO-A1-01/01066
- DE-A1- 4 025 101

## Beschreibung

Die Erfindung betrifft einen Sensor zum Erfassen einer Position eines Gebermagneten und eine Vorrichtung zum Ansteuern einer Bremsanlage eines Fahrzeuges mit dem Sensor.
Aus der EP 238 922 B1 ist ein Positionssensor bekannt, der nach dem Prinzip der linearen Wegmessung basierend auf einer permanentmagnetischen linearen kontaktlosen Verschiebung, PLCD genannt, arbeitet. Ein derartiger Positionssensor wird auch linearer induktiver Positionssensor, LIPS genannt bezeichnet.

Aus der DE 40 25 101 A1 sowie der EP 2 149 784 A1 sind weitere lineare Positionsgeber bekannt.

Es ist Aufgabe der Erfindung, die bekannten Positionssensoren zu verbessern.
Die Aufgabe wird durch die Merkmale der unabhängigen Ansprüche gelöst. Bevorzugte Weiterbildungen sind Gegenstand der abhängigen Ansprüche.
Gemäß einem Aspekt der Erfindung umfasst ein Sensor zum Erfassen einer Position eines Gebermagneten in einer Bewegungsrichtung:
- einen sich in Bewegungsrichtung erstreckenden Spulenträger,
- eine sich in der Bewegungsrichtung erstreckende erste Spule, die auf den Spulenträger aufgewickelt ist, und
- eine nach der ersten Spule ausgerichtete zweite und dritte Spule, die auf den Spulenträger aufgewickelt sind, so dass die zweite und dritte Spule mit der ersten Spule entsprechend einen ersten und zweiten Übertrager ausbilden, deren Übertragungsverhältnis von der Position des Gebermagneten abhängig ist,
- wobei die zweite und dritte Spule zwischen dem Spulenträger und der ersten Spule angeordnet sind,
- wobei der Spulenträger einen sich in Bewegungsrichtung erstreckenden Grundkörper mit je einer ersten und zweiten wenigstens bereichsweise in Umfangsrichtung um die Bewegungsrichtung verlaufenden Nut umfasst, in der entsprechend die zweite und dritte Spule aufgenommen ist,
- wobei die zweite und dritte Spule ihre entsprechende Nut bis zu einer äußeren Mantelfläche des Grundkörpers ausfüllen, so dass die zweite und dritte Spule bündig mit der äußeren Mantelfläche des Grundkörpers abschließen.

Den angegebenen Sensor liegt die Überlegung zugrunde, dass die zuvor genannte erste Spule direkt auf dem Spulenträger gewickelt werden könnte, während die zweite und dritte Spule vom Spulenträger aus gesehen über die erste Spule gewickelt werden könnten. Die zweite und dritte Spule benötigen jedoch in der Regel Begrenzungselemente die die zweite und dritte Spule zusammenhalten sowie ihre Lage definieren. Diese Begrenzungselemente sollten für eine effiziente Materialausnutzung so dünn wie möglich hergestellt werden, weshalb hier Stege als Begrenzungselemente am sinnvollsten sein dürften. Die Stege müssten in der zuvor genannten Konstellation jedoch die erste Spule durchstoßen und würden so den zur Verfügung stehenden Raum zum Wickeln der ersten Spule auf dem Spulenträger einschränken. Die Situation wird weiter dadurch verkompliziert, dass die Stege nicht beliebig dünn ausgebildet werden können, weil sie sonst mechanisch zu empfindlich wären und bei der Herstellung oder im Einsatz beschädigt werden könnten. Noch weiter wird diese Situation dadurch verkompliziert, dass der Spulenträger in der Regel durch ein Spritzgussverfahren hergestellt wird, im Rahmen dessen die Stege ebenfalls eine gewisse Stärke besitzen müssen, um bei der Herstellung nicht beschädigt zu werden.
Hier setzt die Erfindung mit dem Vorschlag an, nicht zuerst die erste Spule, sondern zuerst die zweite und dritte Spule auf den Spulenträger zu wickeln. Auf diese Weise kann die erste Spule nicht nur über die zweite und dritte Spule sondern auch über die beispielhaft als Stege ausbildbaren Begrenzungselemente hinweg gewickelt werden, wodurch die Begrenzungselemente selbst den Wickelraum der ersten Spule kaum oder gar nicht mehr einschränken. Folglich kann der zur Verfügung stehende Bauraum für den angegebenen Sensor effizienter ausgenutzt werden. Erfindungsgemäss liegt die Überlegung zugrunde, statt der Stege als Begrenzungselemente Nuten zu verwenden. Auch wenn diese mit einem erhöhten Materialaufwand einhergeht, bieten die Wandungen dieser Nuten für die zweite und dritte Spule einen ausreichenden mechanischen Halt und können auch bei der Herstellung des Spulenträgers im Vergleich zu den zuvor genannten Stegen höheren mechanischen Belastungen standhalten. Erfindungsgemäss kann die erste Spule ohne Sprünge und Kanten über die zweite und dritte Spule hinweg gewickelt werden.

In einer anderen Weiterbildung umfasst der Grundkörper eine wenigstens bereichsweise in Umfangsrichtung um die Bewegungsrichtung verlaufende Ausnehmung, die in Bewegungsrichtung betrachtet zwischen der ersten Nut und der zweiten Nut ausgebildet ist. Auf diese Weise kann der Materialverbrauch für den Spulenträger optimal auf die mechanische Festigkeit abgestimmt werden, indem die Breite dieser Ausnehmung gerade so hoch gewählt wird, dass die Begrenzungselemente, die durch die Nuten und die Ausnehmung ausgebildet werden gerade fest genug sind, um allen zu erwartenden mechanischen Belastungen Stand zu halten.
Dabei sollte die Oberfläche des Grundkörpers in der Ausnehmung in Bewegungsrichtung betrachtet vorzugsweise stumpfwinklig ausgebildet sein. In einer alternativen Ausführung könnte die Oberfläche des Grundkörpers in der Ausnehmung in Bewegungsrichtung betrachtet auch rund ausgebildet sein. Es könnte ebenfalls sinnvoll sein, nur eine der zweiten und dritten Spule zwischen dem Spulenträger und der ersten Spule anzuordnen und die andere der beiden Spulen auf die erste Spule zu wickeln. In diesem Fall könnte der angegebene Wegsensor in Bewegungsrichtung gesehen mit einer Unsymmetrie ausgestattet werden, die mit der die Kennlinie des angegebenen Wegsensors applikationsabhängig beeinflusst werden kann.
In einer zusätzlichen Weiterbildung des angegebenen Sensors ist der Spulenträger aus Kunststoff, insbesondere mittels eines Spritzgussverfahrens, gefertigt.
In einer besonderen Weiterbildung des angegebenen Sensors sind die zweite und dritte Spule gegenüber der ersten Spule kompakt gewickelte Spulen. Diese kompakte Wicklung ermöglicht die Messung des Flusses an einer Stelle des Kerns wozu an der betreffenden Stelle im Vergleich zur Primärwicklung viele Windungen konzentriert werden müssen.
Dem kann durch die kompakte Wicklung entgegengetreten werden. Die kompakte Wicklung macht jedoch mechanisch feste Begrenzungselemente notwendig, die im Rahmen des angegebenen Sensors bereit gestellt werden können.
In einer bevorzugten Weiterbildung ist der angegebene Sensor als linearer induktiver Positionssensor, LIPS genannt, ausgebildet. Gemäß einem weiteren Aspekt der Erfindung umfasst eine Vorrichtung zum Ansteuern einer Bremsanlage eines Fahrzeuges, ein Bremspedal zum Einstellen einer Bremskraft durch Verschieben des Bremspedals in einer Bewegungsrichtung und einen Sensor nach einem der vorstehenden Ansprüche zum Erfassen der Lage des Bremspedals in der Bewegungsrichtung und zum Ausgeben eines die einzustellende Bremskraft anzeigenden Signals in Abhängigkeit der erfassten Lage des Bremspedals.

Gemäß einem weiteren Aspekt der Erfindung umfasst ein Verfahren zum Herstellen eines angegebenen Sensors Wickeln der zweiten und dritten Spule auf den Spulenträger und Wickeln der ersten Spule über die auf den Spulenträger gewickelte zweite und dritte Spule auf den Spulenträger.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 einen Tandemhauptzylinder mit einem Wegsensor zeigen,
Fig. 2 den Wegsensor aus Fig. 1,
Fig. 3 eine perspektivische Darstellung eines Teils des Wegsensors aus Fig. 2,
Fig. 4 eine Schnittdarstellung einer ersten Ausführung des Wegsensors aus Fig. 3 und
Fig. 5 eine Schnittdarstellung einer zweiten Ausführung des Wegsensors aus Fig. 3 zeigen.

In den Figuren werden gleiche technische Elemente mit gleichen Bezugszeichen versehen und nur einmal beschrieben.

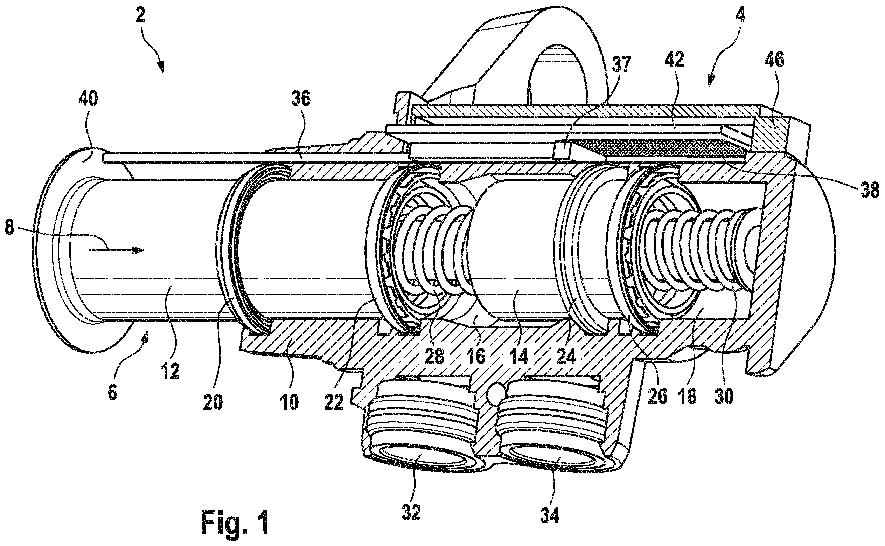

Es wird auf Fig. 1 Bezug genommen, die einen Tandemhauptzylinder 2 mit einem Wegsensor 4 zeigt.

Der Tandemhauptzylinder 2 weist ferner einen Druckkolben 6 auf, der in einer Bewegungsrichtung 8 in einem Gehäuse 10 beweglich angeordnet ist, wobei die Bewegung des Druckkolbens 6 durch ein nicht gezeigtes Fußpedal gesteuert werden kann. Der Druckkolben 6 selbst ist in einen Primärkolben 12 und einen Sekundärkolben 14 unterteilt, wobei der Primärkolben 12 einen Eingang des Gehäuses 10 verschließt und der Sekundärkolben 12 den Innenraum des Gehäuses 10 in eine Primärkammer 16 und eine Sekundärkammer 18 unterteilt. Im Bereich des Eingangs des Gehäuses 10 ist am Primärkolben 12 eine Sekundärmanschette 20 angeordnet, die den Innenraum des Gehäuses 10 von der Umgebungsluft isoliert. In den Innenraum des Gehäuses 10 hinein gesehen folgt nach der Sekundärmanschette 20 eine Primärmanschette 22, die einen Spalt zwischen dem Primärkolben 12 und einer Wand des Gehäuses 10 abdichtet. Eine Druckmanschette 24 am Sekundärkolben 14 isoliert den Druck der Primärkammer 16 vom Druck der Sekundärkammer 18. Ferner dichtet eine weitere Primärmanschette 26 am Sekundärkolben 14 einen Spalt zwischen dem Sekundärkolben 14 und der Wand des Gehäuses 10 ab. Der Primärkolben 12 ist gegen den Sekundärkolben 14 über eine erste Feder 28 abgestützt, während der Sekundärkolben gegen einen Gehäuseboden über eine zweite Feder 30 abgestützt ist. Über einen ersten und zweiten Anschluss 32, 34 können entsprechend die Primärkammer 16 und die Sekundärkammer 18 mit nicht gezeigter Hydraulikflüssigkeit versorgt werden.

Da dem Fachmann die Funktionsweise eines Tandemhauptzylinders bekannt ist, soll auf eine detaillierte Darstellung dieser verzichtet werden.

Der Wegsensor 4 weist einen Probekörper in Form eines Schiebers 36 mit einem Gebermagneten 37 an seinem Kopfende auf, der in die Bildebene hinein betrachtet unter einen noch zu beschreibenden Sensorschaltkreis 38 geschoben werden kann. Zum Schieben des Schiebers 36 weist der Primärkolben 12 einen Flansch 40 auf, an dem der Schieber 36 gegengelagert ist. Der Flansch 40 und der Primärkolben 12 bilden damit gemeinsam ein Messobjekt, dessen Position durch die noch zu beschreibenden Sensorschaltkreis 38 des Wegsensors 4 ermittelt wird. Der Sensorschaltkreis 38 ist aus mehreren Leiterbahnen auf einem Verdrahtungsträger 42, wie einem Leadframe, einer Leiterplatte oder einem anderen Substrat gebildet. Auf die Leiterplatte 42 mit dem Sensorschaltkreis 38 kann zum Schutz beispielsweise vor Schmutz ein Deckel 46 aufgelegt sein.

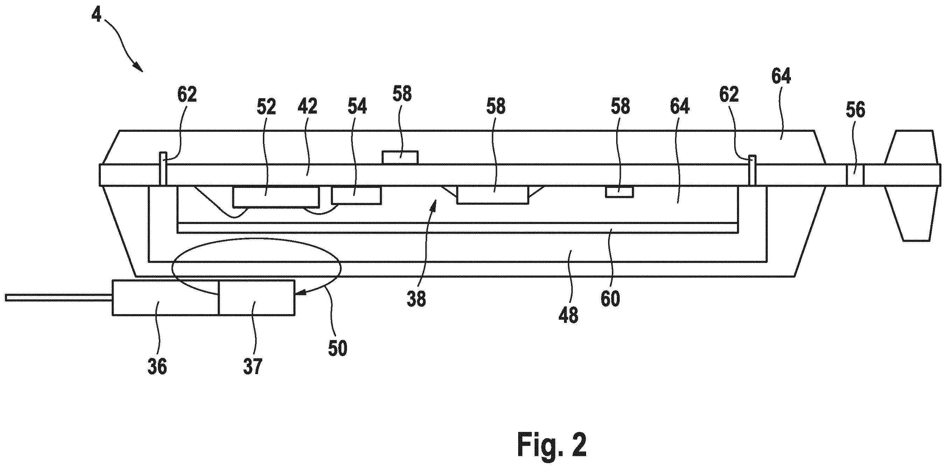

Es wird auf Fig. 2 Bezug genommen, die den Wegsensor 4 aus Fig. 1 zeigt.

Der Schaltkreis 38 des Wegsensors umfasst einen Wandler 48, der in der vorliegenden Ausführung als linearer induktiver Positionssensor, LIPS genannt ausgebildet ist. Der LIPS 48 erfasst ein magnetisches Feld 50 des Gebermagneten 37 und gibt darauf basierend ein nicht näher referenziertes elektrisches Gebersignal an den Schaltkreis 38 aus. Dieses Gebersignal wird von einem ersten Signalverarbeitungschip 52 und einem zweiten Signalverarbeitungschip 54 in ein nicht näher referenziertes Messsignal umgewandelt, aus dem die Lage des Schiebers 36 und damit die Lage des Flansches 40 und des Primärkolbens 12 hervorgeht. Das so erzeugte Messsignal kann abschließend an einer Sendeschnittstelle 56 des Wegsensors 4 über ein nicht weiter dargestelltes Kabel abgegriffen und zu einer nicht weiter dargestellten höheren Signalverarbeitungseinheit wie beispielsweise einer Motor- und/oder Bremssteuerung in einem nicht weiter dargestellten Fahrzeug weitergeleitet werden.

Der Schaltkreis 38 kann Schutzelemente 58 zum Schutz der beiden Signalverarbeitungschips 52, 54 beispielsweise vor einer Überspannung umfassen. Ferner kann zwischen dem Schaltkreis 38 und dem LIPS 48 eine Abschirmplatte 60 angeordnet sein, die elektromagnetische Felder zwischen dem Schaltkreis 38 und dem Wandler 38 abschirmt und so einen Einfluss des Schaltkreises 38 auf den LIPS 48 vermeidet.

In der vorliegenden Ausführung ist der LIPS 48 über einen Formschluss 62 in einer definierten Lage auf dem Verdrahtungsträger 42 angeordnet. Dabei umgibt den Verdrahtungsträger 42 und den Wandler 48 eine Schutzmasse 64.

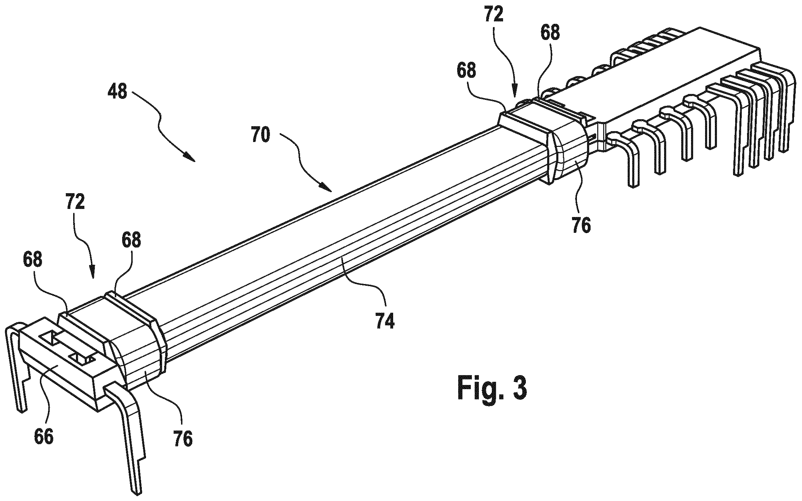

In Fig. 3 ist eine perspektivische Ansicht des LIPS 48 dargestellt. Der LIPS 48 umfasst einen Spulenträger 66 mit einem Wicklungsraum, der über vier Stege 68 in einen Mittelabschnitt 70 und zwei Seitenabschnitte 72 gegliedert ist. Der Spulenträger 66 trägt eine sich entlang eines in Fig. 3 nicht weiter sichtbare Kerns erstreckende Primärspule 74, welche im vorliegenden Fall als einlagig angenommen werden soll. An den beiden gegenüberliegenden Randzonen der Primärspule 74 trägt der Spulenträger 66 dicht gewickelte Sekundärspulen 76 zur Messung einer Induktionsspannung.

Das heißt, dass die Spulen 74, 76 in dem LIPS 48 auf zwei verschiedene Weisen unterschieden werden können. Einerseits wirken die Spulen im Rahmen eines Messtransformators zusammen, wobei die Primärspule 74 ein magnetisches Feld erregt und in den Sekundärspulen 76 die Induktionsspannung induziert. Die Wahl der Primär- und Sekundärspulen 74, 76 ist prinzipiell beliebig und muss nicht in der in Fig. 3 gezeigten Weise ausgestaltet sein. Der LIPS 48 der vorliegenden Ausführung soll mit ratiometrischer Signalverarbeitung auswertbar sein, weshalb die Wahl der Primärspule 74 und der Sekundärspulen 76 in der zuvor genannten Weise erfolgt. Die an einen solchen LIPS 48 angeschlossene Signalverarbeitung führt je eine Messung der Induktionsspannung an beiden Sekundärspulen 76 aus und verrechnet die beiden gemessenen Induktionsspannungen mit einem geeigneten Algorithmus, der die Unterdrückung von Störungen zum Ziel hat. Im einfachsten Fall kann das durch eine geeignete Reihenschaltung der Sekundärspulen 76 erfolgen. Vorzugsweise erfolgt dies durch eine analoge oder digitale Signalverarbeitung, die weitgehende Freiheiten bei der Gestaltung einer mathematischen Abbildung bietet, mit der aus den beiden Induktionsspannungen der Positionswert berechnet wird.

Ferner lassen die Spulen 74, 76 hinsichtlich ihrer geometrischen Gestalt in Spulen 74 mit geringer Windungsdichte unterteilen, die annähernd entlang der gesamten Kernlänge gewickelt sind (im vorliegenden Ausführungsbeispiel die Primärspule 74), sowie solche, die kompakt mit hoher Windungsdichte an einer bestimmten Stelle des nicht gezeigten Kerns gewickelt sind (im vorliegenden Ausführungsbeispiel die Sekundärspulen 76).

Weitere Details zur Funktionsweise eines LIPS sind beispielsweise aus den Druckschriften DE 44 259 03 C3 und der EP 238 922 B1 entnehmbar.

In Fig. 3 liegen die Windungen der Primärspule 74 im Mittelabschnitt 70 und den beiden Seitenabschnitten 72, die durch die Stege 68 abgeteilt werden, auf dem gleichen Radius. Dadurch wird der nicht weiter gezeigte magnetische Kern im Spulenträger 66 engstmöglichst von den einzelnen Spulen 74, 76 umschlossen. Dies ist besonders vorteilhaft, denn die 74, 76 Spulen haben bei einer vorgegebenen Windungszahl die geringste Drahtlänge und damit auch den geringsten ohmschen Widerstand, den geringsten Materialverbrauch sowie die geringste Masse und das geringste Volumen. Ferner wird ein unnötiger Streufluss durch ein ebenfalls umschlossenes Luftvolumen (bzw. Volumen des dia- oder paramagnetischen Spulenträgers) minimiert. Der Streufluss kann die Flussverkettung beeinträchtigen und dazu führen, dass externe Felder die Spulen 74, 76 stärker als notwendig beeinflussen.

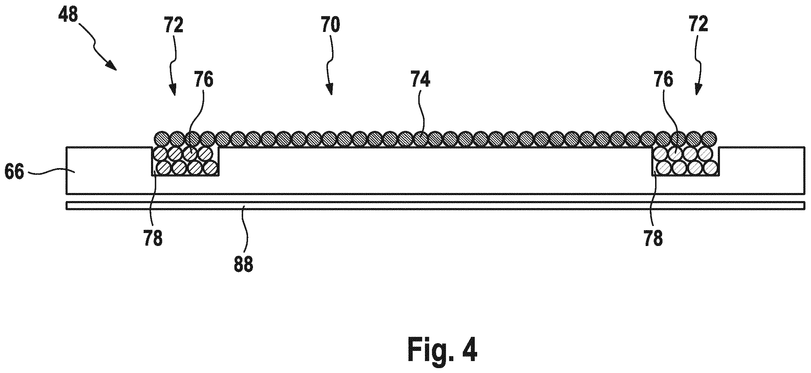

Es wird auf Fig. 4 Bezug genommen, die eine Schnittdarstellung einer alternativen Ausführung des LIPS 48 aus Fig. 3 zeigt.

Dem in Fig. 4 gezeigten LIPS 48 liegt die Erkenntnis zugrunde, dass der in Fig. 3 gezeigte Wegsensor fertigungstechnische Nachteile birgt, die die elektrotechnischen Vorteile überwiegen.

In Fig. 4 sind die Sekundärspulen 76 in Nuten 78 oder Taschen gewickelt. Dabei füllen die Sekundärspulen 76 ihre Nuten in radialer Richtung gesehen vollständig aus. Es ist unmittelbar zu erkennen, dass hinsichtlich der Begrenzung des Wickelraums der Sekundärspulen 76 kein Unterschied zur Lösung nach Fig. 3 besteht. Jedoch weist der Spulenträger 66 in Fig. 4 keine schmale Stege 78 auf, die die Robustheit bzw. Haltbarkeit von Werkstück bzw. Werkzeug beeinträchtigen. Die Primärspule 74 ist dabei vom Spulenträger 66 aus gesehen radial auf die Sekundärspulen 76, gewickelt und legt sich auf so auf der Oberfläche des Spulenträgers 66 und der Sekundärspulen 76 ab. Die vom Spulenträger 66 und den Sekundärspulen 76 gemeinsam ausgebildete Oberfläche weist dabei nahezu keine Konturen und daher auch keine Hindernisse für einen gleichförmigen Windungsabstand auf. Obgleich die in Fig. 4 gezeigte Anordnung des Spulenträgers 66, der Primärspule 74 und der Sekundärspulen 76 zur Verwendung für Induktivitäten, Transformatoren oder Übertrager in allgemeinen Anwendungen nicht vorteilhaft ist, konnte jedoch experimentell überraschend nachgewiesen werden, dass der zusätzlich von der Primärspule 74 umschlossene Luft- bzw. Spulenträgerraum nur vernachlässigbaren Einfluss auf die messtechnischen Eigenschaften des so ausgebildeten LIPS 48 hat.

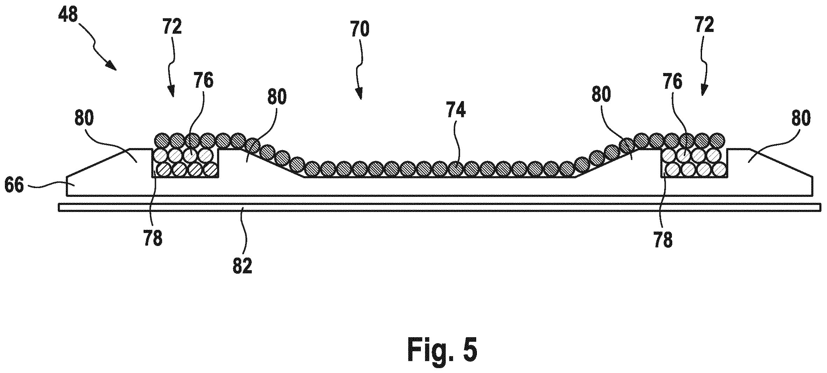

Es wird auf Fig. 5 Bezug genommen, die eine Schnittdarstellung einer weiteren alternativen Ausführung des LIPS 48 aus Fig. 3 zeigt.

In Fig. 5 wird der Materialverbrauch des Spulenträgers bei sonst gleichen Eigenschaften des LIPS 48 gegenüber dem LIPS aus Fig. 4 minimiert. Der größere Radius der Primärspule 74 in Fig. 4 gegenüber Fig. 3 ist in Fig. 5 im Mittel reduziert, weil Rampen 80 der Wicklung der Primärspule 74 ermöglichen, verschiedene Radien einzunehmen. Die Steigung der Rampen sollte dabei auf den Wickelprozess der Primärspule 74 abgestimmt werden.

Um sicher zu vermeiden, dass die Windungen der Primärspule 74 in den Bereich kleinerer Radien wegrutschen oder -gleiten, könnte statt der Rampen 80 auch eine treppenförmige Struktur vorgesehen werden. Alternativ kann der Bereich der Rampen 80 mit einer rauen Oberfläche ausgeführt werden, damit die Windungen sich lokal an den Unebenheiten abstützen können.

Alle dargestellten Varianten des LIPS 48 könnten wahlweise als Rotationskörper ausgeführt werden. Alternativ wäre jedoch mit einem Querschnitt des in Fig. 4 und 5 gezeigten magnetischen Kern 82 in Form eines N-Eck, einer Ellipse oder eine anderen Form beispielsweise des Spulenträgers 66 möglich, auf die sich eine Wicklung aufbringen lässt.

Zudem könnte der in den Fig. 4 und 5 dargestellte Schnitt nicht am gesamten Umfang des LIPS 48 gegeben sein, wie bereits Fig. 3 zeigt: Es genügt, wenn die Stege 68 und damit auch die Nuten 78 oder Taschen in Teilbereichen des gesamten Umfangs des LIPS 48 vorhanden sind, um das Ziel einer mehrlagigen Wicklung für die Sekundärspulen 76 beispielsweise mit einem rechteckigem Querschnitt des Wicklungspaketes zu erreichen. In der Regel lassen es die Wicklungsdrähte ohnehin nicht zu, dass die Windungen, falls in Teilbereichen des Umfangs keine Begrenzung in Form von Stegen 68 oder Nuten 78 vorhanden ist, nennenswert von der vorgegebenen Form abweichen.

Die in den Fig. 4 und 5 gezeigten Schnitte stellen daher nur beispielhaft als rotationssymmetrische Ausbildung des LIPS 48 angesehen werden. Alternativ könnte der LIPS 48 auch in der in Fig. 4 und 5 gezeigten Form ausgebildet sein, wenn es mindestens einen Schnitt durch den Spulenkörper 66 gibt, der einer der dargestellten Formen entspricht, während alle anderen möglichen Schnitte durch den Spulenkörper 66, d.h. in anderen Umfangswinkeln, einen anders konturierten Querschnitt, insbesondere einen unkonturierten Körper zeigen können.

Lediglich die Möglichkeit, dass die Kontur des Spulenkörpers 66 in diesen anderen Umfangswinkeln dünne Stege 68 enthält, sollte zweckmäßigerweise ausgeschlossen werden, weil dies einer robusten, fertigungsgerechten Konstruktion im Wege stehen könnte.

## Patentansprüche

1. Sensor (48) zum Erfassen einer Position eines Gebermagneten (37) in einer Bewegungsrichtung, umfassend:
- einen sich in Bewegungsrichtung erstreckenden Spulenträger (66),
- eine sich in der Bewegungsrichtung erstreckende erste Spule (74), die auf den Spulenträger (66) aufgewickelt ist, und
- eine nach der ersten Spule (74) ausgerichtete zweite und dritte Spule (76), die auf den Spulenträger (66) aufgewickelt sind, so dass die zweite und dritte Spule (76) mit der ersten Spule (74) entsprechend einen ersten und zweiten Übertrager ausbilden, deren Übertragungsverhältnis von der Position des Gebermagneten (37) abhängig ist,
- **dadurch gekennzeichnet, dass** die zweite und dritte Spule (76) zwischen dem Spulenträger (66) und der ersten Spule (74) angeordnet ist, wobei der Spulenträger (66) einen sich in Bewegungsrichtung erstreckenden Grundkörper mit je einer ersten und zweiten wenigstens bereichsweise in Umfangsrichtung um die Bewegungsrichtung verlaufenden Nut (78) umfasst, in der entsprechend die zweite und dritte Spule (76) aufgenommen ist, wobei die zweite und dritte Spule (76) ihre entsprechende Nut (78) bis zu einer äußeren Mantelfläche des Grundkörpers ausfüllen, so dass die zweite und dritte Spule (74) bündig mit der äußeren Mantelfläche des Grundkörpers abschließen.

2. Sensor (48) nach Anspruch 1, wobei der Grundkörper eine wenigstens bereichsweise in Umfangsrichtung um die Bewegungsrichtung verlaufende Ausnehmung umfasst, die in Bewegungsrichtung betrachtet zwischen den Nuten (78) ausgebildet ist.

3. Sensor (48) nach Anspruch 2, wobei eine Oberfläche des Grundkörpers in der Ausnehmung in Bewegungsrichtung betrachtet stumpfwinklig verläuft.

4. Sensor (48) nach einem der vorstehenden Ansprüche, wobei die zweite und dritte Spule (76) gegenüber der ersten Spule (74) kompakt gewickelte Spulen sind.

5. Sensor (48) nach einem der vorstehenden Ansprüche, wobei der Spulenträger (66) aus Kunststoff, insbesondere mittels eines Spritzgussverfahrens, gefertigt ist.

6. Vorrichtung zum Ansteuern einer Bremsanlage (2) eines Fahrzeuges, umfassend ein Bremspedal zum Einstellen einer Bremskraft durch Verschieben des Bremspedals in einer Bewegungsrichtung und einen Sensor (48) nach einem der vorstehenden Ansprüche zum Erfassen der Lage des Bremspedals in der Bewegungsrichtung und zum Ausgeben eines die einzustellende Bremskraft anzeigenden Signals in Abhängigkeit der erfassten Lage des Bremspedals.

7. Verfahren zum Herstellen eines Sensors (48) nach einem der Ansprüche 1 bis 5, umfassend:
- Wickeln der zweiten und dritten Spule (76) auf den Spulenträger (66), und
- Wickeln der ersten Spule (74) über die auf den Spulenträger (66) gewickelte zweite und dritte Spule (76) auf den Spulenträger (66).

## Claims

1. Sensor (48) for detecting a position of a transducer magnet (37) in a direction of movement, comprising:
- a coil carrier (66), which extends in the direction of movement,
- a first coil (74), which extends in the direction of movement and is wound up on the coil carrier (66), and
- a second and a third coil (76), which are aligned according to the first coil (74) and are wound up on the coil carrier (66), so that the second and third coils (76) correspondingly form with the first coil (74) a first and a second transformer, the transformation ratio of which is dependent on the position of the transducer magnet (37),
- **characterized in that** second and third coils (76) are arranged between the coil carrier (66) and the first coil (74), the coil carrier (66) comprising a main body which extends in the direction of movement and has a first and a second slot (78), which runs at least in certain regions in the circumferential direction around the direction of movement and in which the second and the third coil (76) is correspondingly accommodated, the second and third coils (76) filling their corresponding slot (78) up to an outer lateral surface of the main body, so that the second and third coils (74) finish flush with the outer lateral surface of the main body.

2. Sensor (48) according to Claim 1, the main body comprising a recess, which runs at least in certain regions in the circumferential direction around the direction of movement and is formed between the slots (78) when viewed in the direction of movement.

3. Sensor (48) according to Claim 2, a surface of the main body running in the recess at an obtuse angle when considered in the direction of movement.

4. Sensor (48) according to one of the preceding claims, the second and third coils (76) being compactly wound coils in comparison with the first coil (74).

5. Sensor (48) according to one of the preceding claims, the coil carrier (66) being produced from plastic, in particular by means of an injection-moulding process.

6. Device for actuating a brake system (2) of a vehicle, comprising a brake pedal for setting a braking force by displacing the brake pedal in a direction of movement and a sensor (48) according to one of the preceding claims for detecting the position of the brake pedal in the direction of movement and for outputting a signal indicating the braking force to be set, in dependence on the detected position of the brake pedal.

7. Method for producing a sensor (48) according to one of Claims 1 to 5, comprising:
- winding the second and third coils (76) onto the coil carrier (66), and
- winding the first coil (74) onto the coil carrier (66) over the second and third coils (76) wound onto the coil carrier (66).

## Revendications

1. Capteur (48) destiné à détecter une position d'un aimant de transmetteur (37) dans un sens de déplacement, comprenant :
- un porte-bobine (66) qui s'étend dans le sens du déplacement,
- une première bobine (74) qui s'étend dans le sens du déplacement, laquelle est enroulée sur le porte-bobine (66), et
- une deuxième et une troisième bobine (76) orientées après la première bobine (74), lesquelles sont enroulées sur le porte-bobine (66), de sorte que la deuxième et la troisième bobine (76) forment en conséquence avec la première bobine (74) un premier et un deuxième transmetteur dont le rapport de transmission est dépendant de la position de l'aimant de transmetteur (37),
- **caractérisé en ce que** la deuxième et la troisième bobine (76) sont disposées entre le porte-bobine (66) et la première bobine (74), le porte-bobine (66) comportant un corps de base qui s'étend dans le sens du déplacement doté respectivement d'une première et d'une deuxième rainure (78) qui s'étendent au moins dans certaines zones dans la direction circonférentielle autour du sens du déplacement, dans lesquelles sont accueillies en conséquence la deuxième et la troisième bobine (76), la deuxième et la troisième bobine (76) remplissant leur rainure (78) correspondante jusqu'à une enveloppe extérieure du corps de base, de sorte que la deuxième et la troisième bobine (74) se terminent à fleur de l'enveloppe extérieure du corps de base.

2. Capteur (48) selon la revendication 1, le corps de base comportant une cavité qui s'étend au moins dans certaines zones dans la direction circonférentielle autour du sens du déplacement, laquelle, vue dans le sens du déplacement, est formée entre les rainures (78) .

3. Capteur (48) selon la revendication 2, une surface du corps de base dans la cavité, vue dans le sens du déplacement, s'étendant selon un angle obtus.

4. Capteur (48) selon l'une des revendications précédentes, la deuxième et la troisième bobine (76) étant des bobines enroulées de manière compacte par rapport à la première bobine (74).

5. Capteur (48) selon l'une des revendications précédentes, le porte-bobine (66) étant fabriqué en matière plastique, notamment au moyen d'un procédé de moulage par injection.

6. Dispositif de commande d'un système de freinage (2) d'un véhicule, comprenant une pédale de frein servant à régler une force de freinage par déplacement de la pédale de frein dans un sens de déplacement et un capteur (48) selon l'une des revendications précédentes destiné à détecter la position de la pédale de frein dans le sens du déplacement et à délivrer un signal qui indique la force de freinage à régler en fonction de la position détectée de la pédale de frein.

7. Procédé pour régler un capteur (48) selon l'une des revendications 1 à 5, comprenant :
- enroulement de la deuxième et la troisième bobine (76) sur le porte-bobine (66), et
- enroulement de la première bobine (74) sur le porte-bobine (66), au-dessus de la deuxième et de la troisième bobine (76) enroulées sur le porte-bobine (66) .
